# EUROPEAN PATENT SPECIFICATION

(11) **EP 0 371 546 B1**
(45) Date of publication and mention of the grant of the patent: **29.03.1995**
(21) Application number: 89202956.2
(22) Date of filing: 21.11.1989
(51) Int. Cl.: G01N 21/90

(54) **A method and an apparatus for detecting cracks in the mouth zone of a transparant container**
Verfahren und Vorrichtung zur Feststellung von Fehlern an der Mündung eines transparenten Behälters
Procédé et appareil pour détecter des défauts dans l'embouchure d'un récipient transparent

(30) Priority: 28.11.1988 NL 8802931
(43) Date of publication of application: 06.06.1990
(73) Proprietor: HEUFT SYSTEMTECHNIK GMBH, D-56659 Burgbrohl (DE)
(72) Inventor: Morskieft, Maria Gertrudis, NL-7554 RK Hengelo (NL)
(74) Representative: Gritschneder, Martin, Dipl.-Phys.

(56) References cited:
- EP-A- 0 209 077
- DE-A- 2 718 802
- GB-A- 2 159 617
- US-A- 3 453 054
- US-A- 3 735 144
- US-A- 4 424 441
- PATENT ABSTRACTS OF JAPAN, vol. 5, no. 202 (P-95)(874), 22nd December 1981 ; & JP-A-56 126 706
- PATENT ABSTRACTS OF JAPAN, vol. 10, no. 157 (P-464)[2213], 6th June 1986 ; & JP-A-61 10 748

## Description

The invention relates to a method and an apparatus for detecting cracks in the mouth zone of a transparent container, e.g. a glass bottle according to claims 1 and 2 respectively.

The embodiment in which the light source and the mouth zone of the container are shaped similarly is very practical.

A prior art apparatus according to US-A-3 735 144 has a structure such that in order to allow a full inspection of the relevant inner of the bottle under inspection a scanning must take place. Furthermore this prior art apparatus is not particularly suited for detecting cracks in the mouth zone of a transparent container.

EP-A-0 209 077 discloses an apparatus for detecting defects on a bottle mouth in which the bottle mouth is illuminated from the side by an annular source and a conical mirror positioned above the mouth directs reflected light to a detector.

The invention will now been explained with reference to the accompanying drawing. In the drawing:
Figure 1 is a schematic view of an arrangement according to the invention; and
Figure 2 is a detail on an enlarged scale of the arrangement according to figure 1 for explaining the inspection according to the invention.

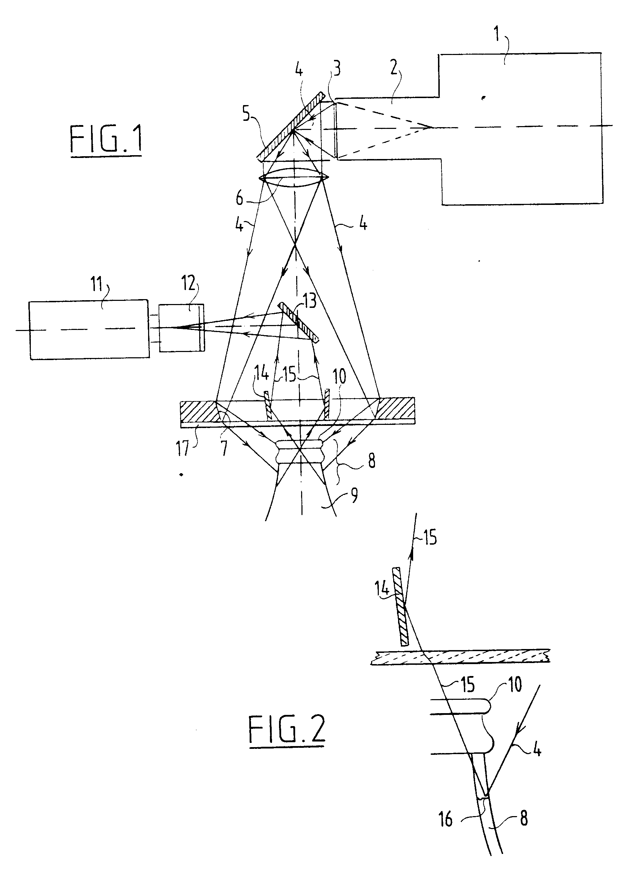

Figure 1 shows a light source 1, in this case a stroboscopic light source, to which a conical light conductor 2 is added, the front edge 3 of which is a secondary annular light source. Such an arrangement is described in Dutch patent application 8800866, not published before, in the name of Thomassen & Drijver-Verblifa N.V., a firm of which the present applicants have recently divided off.

The light 4 emitted by the annular light source is reflected by a flat mirror 5 and via a lense 6 directed to a conical mirror 7 illuminating in the way shown the mouth zone 8 of a glass bottle 9. It will be clear that the upper edge 10 of the bottle is not illuminated. This is important in view of the inspection to be described hereinafter.

A video-camera 11 with an objective lens 12 senses via a flat mirror 13 and a conical mirror 14 the inner wall of the mouth zone 8 of the bottle 9. As a result of the presence of the conical mirror an effective image magnification takes place, resulting in a more detailed video-image and a better use of the resolution.

In case of a perfect mouth zone, i.e. a not-cracked mouth zone, no reflection in the direction of the video-camera takes place. In that case the picture is dark. If, however, as is shown in figure 2, in the mouth zone 8 a crack 16 is present, this crack will reflect the impinging light, which reflected light, referred to with 15, reaches via conical mirror 14 camera 11 for forming a picture there.

It should be noted that the drawing is not exactly drawn in scale.

For safeguarding the optical parts of the inspection system against external influences the optical parts are enclosed by a closed housing. The upper side of a container to be inspected is sensed and illuminated through a glass plate 17, which also serves for supporting the conical mirror 7 and the conical mirror 14. By means of a support not-shown, the glass plate 17 also carries the flat mirror 13.

It should be noted that the conical mirrors can also exhibit curved shapes, by means of which a desired magnification or reduction may be realized.

## Claims

1. A method for detecting cracks (16), if any, in the mouth zone (8) of a transparent container, e.g. a glass bottle (9), said method comprising the steps of
providing the transparant container (9);
illuminating the mouth zone (8) to be inspected;
sensing the image of said mouth zone (8);
characterized
by illuminating the mouth zone (8) such that the outer surface of the mouth zone (8) is illuminated without illuminating the upper edge (10) of the container (9);
by sensing the image of said mouth zone (8) such that the image of only the inner surface is sensed so that in the case of a good container (9) the surface of the mouth zone (8) does not give a detectable reflection.

2. An apparatus for carrying out the method according to claim 1 for detecting cracks (16), if any, in the mouth zone (8) of a transparant container, e.g. a glass bottle (9), comprising
means for positioning the transparant container (9);
illuminating means (1 to 7) including an annular light source (3) for illuminating the mouth zone (8) to be inspected and
sensing means (11, 12, 13) including a first conical mirror (14) for sensing the image of said mouth zone (8);
characterized
by said illuminating means including a second conical mirror (7) arranged to illuminate the outer surface of said mouth zone (8) without illuminating the upper edge (10) of the container and
in that said first conical mirror (14) of the sensing means is arranged such that the inner surface of said mouth zone (8) is sensed so that the sensing means do not sense reflected light in the case of a good container (9).

3. Apparatus according to claim 2, characterized in that the first conical mirror (14) inspects the inner surface of said mouth zone (8) with an increased opening angle.

## Patentansprüche

1. Verfahren zum Erkennen gegebenenfalls vorhandener Sprünge (16) in dem Mündungsbereich (8) eines transparenten Behälters, z.B. einer Glasflasche (9), wobei das Verfahren folgende Schritte umfaßt:
Bereitstellen des transparenten Behälters (9);
Beleuchten des zu inspizierenden Mündungsbereiches (8);
Aufnehmen des Bildes des Mündungsbereiches (8),
dadurch gekennzeichnet,
daß der Mündungsbereich (8) so beleuchtet wird, daß die Außenfläche des Mündungsbereiches (8) beleuchtet wird, ohne daß der obere Rand (10) des Behälters (9) beleuchtet wird;
daß das Bild des Mündungsbereiches (8) so aufgenommen wird, daß nur das Bild der Innenfläche aufgenommen wird, so daß im Falle eines fehlerfreien Behälters (9) die Oberfläche des Mündungsbereiches (8) keine erkennbare Reflektion erzeugt.

2. Vorrichtung zur Durchführung des Verfahrens nach Anspruch 1 zum Erkennen von gegebenenfalls vorhandenen Sprüngen (16) in dem Mündungsbereich (8) eines transparenten Behälters, z.B. einer Glasflasche (9), mit
einer Einrichtung zur Positionierung des transparenten Behälters (9),
Beleuchtungseinrichtungen (1 bis 7) mit einer ringförmigen Lichtquelle (3) zum Beleuchten des zu inspizierenden Mündungsbereiches (8) und
Aufnahmeeinrichtungen (11, 12, 13) mit einem ersten konischen Spiegel (14) zum Aufnehmen des Bildes des Mündungsbereiches (8);
dadurch gekennzeichnet,
daß die Beleuchtungseinrichtung einen zweiten konischen Spiegel (7) aufweist, der zur Beleuchtung der Außenfläche des Mündungsbereiches (8) ohne Beleuchtung des oberen Randes (10) des Behälters angeordnet ist und
daß der erste konische Spiegel (14) der Aufnahmeeinrichtung so angeordnet ist, daß die Innenfläche des Mündungsbereiches (8) aufgenommen wird, so daß die Aufnahmeeinrichtungen im Fall eines fehlerfreien Bildes (9) kein reflektiertes Licht aufnimmt.

3. Vorrichtung nach Anspruch 2, dadurch gekennzeichnet, daß der erste konische Spiegel (14) die Innenfläche des Mündungsbereiches (8) mit einem vergrößertem Öffnungswinkel inspiziert.

## Revendications

1. Procédé pour détecter des défauts (16), s'il en existe, dans la région d'embouchure (8) d'un récipient transparent, par exemple une bouteille en verre (9), ledit procédé comprenant les étapes de :
positionnement du récipient transparent (9) ;
éclairage de la région d'embouchure (8) à inspecter ; et
détection de l'image de ladite région d'embouchure (8);
caractérisé en ce que :
on éclaire la région d'embouchure (8) de façon à éclairer la surface extérieure de la région d'embouchure (8) sans éclairer le bord supérieur (10) du récipient (9) ; et
on détecte l'image de ladite région d'embouchure (8) de façon à détecter seulement l'image de la surface intérieure de sorte que, dans le cas d'un récipient sans défaut (9), la surface de la région d'embouchure (8) ne donne pas une réflexion détectable.

2. Appareil pour la mise en oeuvre du procédé suivant la revendication 1, pour détecter des défauts (16), s'il en existe, dans la région d'embouchure (8) d'un récipient transparent, par exemple une bouteille en verre (9), comprenant :
des moyens de positionnement du récipient transparent (9) ;
des moyens d'éclairage (1 à 7) comportant une source de lumière annulaire (3) pour éclairer la région d'embouchure (8) à inspecter ; et
des moyens de détection (11,12,13) comportant un premier miroir conique (14) pour détecter l'image de ladite région d'embouchure (8) ;
caractérisé en ce que :
lesdits moyens d'éclairage comprennent un deuxième miroir conique (7) agencé de manière àéclairer la surface extérieure de ladite région d'embouchure (8) sans éclairer le bord supérieur (10) du récipient ; et
ledit premier miroir conique (14) des moyens de détection est agencé de façon à détecter la surface intérieure de ladite région d'embouchure (8), de sorte que les moyens de détection ne détectent pas de lumière réfléchie dans le cas d'un récipient sans défaut (9).

3. Appareil suivant la revendication 2, caractérisé en ce que le premier miroir conique (14) inspecte la surface intérieure de ladite région d'embouchure (8) avec un angle d'ouverture plus grand.
